(19)

Europäisches
Patentamt

European
Patent Office

Office européen
des brevets

(11)     **EP 2 608 082 A1**

(12)                    **EUROPEAN PATENT APPLICATION**

(43) Date of publication:
    **26.06.2013   Bulletin 2013/26**

(51) Int Cl.:
    ***G06F 17/50*** (2006.01)

(21) Application number: **11194404.7**

(22) Date of filing: **19.12.2011**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Fujitsu Limited
    Kawasaki-shi, Kanagawa 211-8588 (JP)**

(72) Inventor: **van den Berghe, Sven
    Marlow
    Buckinghamshire SL7 3LE (GB)**

(74) Representative: **Hutchison, James
    Haseltine Lake LLP
    300 High Holborn
    London, Greater London WC1V 7JH (GB)**

(54)    **Energy flow simulator and energy flow simulation method**

(57)    Embodiments of the present invention provide an energy flow simulator for modelling energy flow in an enclosure using a model, the model comprising a plurality of nodes each representing an element responsible for converting an applied load to an output load, the output load including at least one of a loss and a load drawn by one or more other elements; the model comprising: a plurality of thermal connections, each thermal connection representing the drawing of a thermal load by one element from another and being configured to transfer data representing the drawn thermal load to an input module of one of the plurality of nodes from an output module of another of the plurality of nodes; a plurality of electrical connections, each electrical connection representing the drawing of an electrical load by one element from another and being configured to transfer data representing the drawn electrical load to an input module of one of the plurality of nodes from an output module of another of the plurality of nodes; wherein the data transferred via the plurality of thermal connections and the data transferred via the plurality of electrical connections are transferred using a fixed data format comprising a single value indicating the magnitude of the respective load, and a further single value indicating the potential of said respective load to be converted at the node receiving the load.

FIGURE 1

**Description**

The present invention relates to the simulation of energy flow and in particular relates to simulation of energy flow in an enclosure containing devices by modelling devices and processes in which energy is transferred or exchanged as a series of nodes.

As energy becomes increasingly expensive and natural resources become scarcer, there is more use of simulations to build and/or optimise the running of equipment. Many electrical devices, such as computing devices, produce heat as a by-product and require cooling. Other devices which may be considered for such simulation are specifically designed to produce heat or to cool produce, such as gas-powered ovens, furnaces, chillers in supermarkets or distribution warehouses etc. In all these cases, simulation can be used to determine, for example, what level of energy input, whether in the form of electricity, gas, or some other energy source, produces the most efficient functioning of the device in question.

One example of the use of such simulation is in modelling energy flow in data centres.

A data centre is a facility used to provide computer systems and possibly also associated components, such as data storage systems. Data centres are an essential and mission critical element in today's society and businesses. They are the base infrastructure of Cloud Computing. The use of data centres is increasing, particularly with the current trends to achieve economies of scale through centralising information processing.

Data centres use a large amount of energy, which is becoming increasingly expensive and whose production releases a large volume of $CO_2$. So the efficient design and management of data centres is important. The aim of the design and management of data centres is to deliver a reliable service while minimising energy consumption for running and cooling the computer servers and reducing carbon emissions to help the environment.

Simulation is a valuable tool to achieve the efficient design and management of data centres and in many cases allows the evaluation of efficiency measures that cannot be performed on operational data centres due to due to the need for continuous operation.

One type of simulation that is increasing in use is to determine the overall heat and electricity response of the data centre through a network of load creating and responding nodes. An example of this type of node-based simulator is the "Romonet Simulator" (subject of International patent publication number WO2010/133832).

Embodiments of the present invention provide an energy flow simulator for modelling energy flow in an enclosure using a model, the model comprising a plurality of nodes each representing an element responsible for converting an applied load to an output load, the output load including at least one of a loss and a load drawn by one or more other elements; the model comprising: a plurality of thermal connections, each thermal connection representing the drawing of a thermal load by one element from another and being configured to transfer data representing the drawn thermal load to an input module of one of the plurality of nodes from an output module of another of the plurality of nodes; a plurality of electrical connections, each electrical connection representing the drawing of an electrical load by one element from another and being configured to transfer data representing the drawn electrical load to an input module of one of the plurality of nodes from an output module of another of the plurality of nodes; wherein the data transferred via the plurality of thermal connections and the data transferred via the plurality of electrical connections are transferred using a fixed data format comprising a single value indicating the magnitude of the respective load, and a further single value indicating the potential of said respective load to be converted at the node receiving the load.

References herein to elements should be taken to include devices which use energy/power including electrical devices such as servers or, at a different end of the size range, components on a circuit board. Equally, the term enclosure refers to any volume which can be viewed as enclosed for the purposes of the energy flow simulator. The enclosure could be a hall or building of a data centre, a (smaller) room or part of a hall, or a casing surrounding a circuit board, at the other end of the size range. In this application, heat may be defined as the transfer of energy between bodies at different temperatures. Thus heat (or heat transfer) can be measured for example in joules per second.

Although it is possible that there is a single heat source only for simulation in the enclosure in the form of a heat source, and a single heat extractor, in many embodiments there is more than one device. Specifically the enclosure may contain at least one heat extractor (a device that cools the enclosure). This is the situation, for example, in many data centres which contain a plurality of server units (heat sources) and a plurality of computer room air conditioning units and/or chillers (heat extraction devices) which are used with connective heat transfer to extract heat out of the enclosed domain. It is also the case, for example, on the mother board of a PC or other computer, with its CPU and memory, power supply unit or connectors, fan(s) and other typical components.

Passing extra information between the simulator nodes in the manner described in the embodiments of the present invention provides nodes with information in the form of the value representing potential, which can be interpreted in multiple ways according to the requirements of the simulator node receiving the information. That is to say, the format of the data (information) passed between nodes is standardised, but the interpretation of the information is node-specific. The information (the single value and the further single value) and the multiple interpretations of it lead to more accurate and precise modelling of the data centre components in order to find optimum settings and configurations of the enclosure being modelled and its contents in order to increase efficiency and save energy.

Simulating energy flow in an enclosure using an energy flow simulator embodying the present invention allows more accurate and representative simulations (for example over a wider range of operating conditions) of data centre (or other enclosure) energy flows while retaining the simplicity and flexibility of existing node-based simulators. In embodiments of the present invention, a wider range of operating conditions can be modelled in a single simulation than is possible in existing node-based simulators, thus increasing the fidelity of modelling operating conditions and so the accuracy of the simulator's predictions. This will lead to increased confidence in the simulator's predictions and so greater savings resulting from the more efficient operating practices developed.

Existing node-based simulators focus solely on the energy flows through the data centre and assume that the performance of the devices being modelled depends solely on the load applied to them. However, data centres (and their devices, and other entities being modelled) may be much more complex than this and the performance of their equipment can depend on a number of other factors. When cooling an enclosure such as a data centre, the most important of these other factors is the temperature of the medium transferring the heat, usually air or water. Cooling may be performed in several stages, with heat transferred between media at each stage. The potential of heat to be transferred between media and hence the effectiveness of the transfer depends on the temperature difference between the media. With loads representing electrical power the equipment performance can depend on current or power factor (ratio of reactive and resistive loads in an alternating current), which indicates the potential of electrical power to be converted to work at the equipment (modelled by a node in a simulator embodying the present invention).

It is known that it is more energy intensive to eject heat to the atmosphere when it is warmer. In existing node-based simulators, allowance is made for the performance of equipment to depend on the external temperature; for example, external temperature can be set for a simulation, and this external temperature data can be fed to the nodes. The very crude modelling of existing node-based simulators hence requires a number of different simulations, one for each of the temperature regimes and each with new performance data, to find optimised settings. Simulations of dynamic data centres require explicit recognition that device performance depends on more than one variable, and the complex inter-dependencies of devices and components within an enclosure cannot be accurately modelled by, merely running repeated simulations with different fixed values for external temperature.

In embodiments of the present invention, when data representing a thermal load is transferred using the fixed data format, the further single value may be a value representing a temperature difference between a medium carrying the thermal load and a predetermined temperature stored by the node outputting said data. Hence, embodiments of the present invention provide a simple and consistent data format which can be used to provide information between nodes which enables far more accurate modelling of thermal energy flows than that which is possible in existing node-based simulators.

The modelling of node properties is a separate process to simulation and takes into account the actual device properties and the connections to other devices. Optionally, in embodiments of the present invention, each node may include an input module, configured to receive data representing the applied load, a calculation module, configured to calculate data representing the output load by applying a function to the received data representing the applied load, and an output module, configured to make the calculated data representing the output load available for transfer to other nodes. Embodiments of the present invention pass two variables between nodes, hence the calculation module can be configured to calculate output load based not only a single variable input from another node representing a load (and possibly also an external input value), but also based on another variable input from another node representing the potential of that load to be transferred (ie, by means of thermal transfer between bodies or media, or energy transfer). That is to say, input variables to the function may include the single value and the further single value. Both variables may be live and dynamically vary during the simulation, rather than being static such as a simple input of a value such as external temperature. Therefore, the calculation module can be configured to model actual device behaviour far more accurately than is possible in existing node-based simulators.

Embodiments of the present invention enable thermal transfer between different bodies or different media to be accurately modelled. The rate at which heat is transferred depends not only on the thermal load, but on the temperature of the load (which may be described by a temperature offset). Cooling (thermal transfer) processes can be modelled using equations in which the temperature difference between two bodies is proportional to the rate of heat exchange. Advantageously, simulators embodying the present invention enable modelling of effects such as partial cooling by external air. Of course, the amount of heat transferred to external air is dependent upon the temperature difference between the thermal air, and the body carrying an applied thermal load. Therefore, in optional embodiments, at least some of the plurality of nodes further comprise an external variable input configured to receive data representing an environmental variable at the element, and that data is used by the function applied by the calculation modules of said at least some of the plurality of nodes.

In order to accurately model an element of the enclosure being modelled, it may be necessary to include a simulation variable such as an amount of IT work to be done at one end of a connected (by thermal or electrical connections) line of nodes, or even to a node between other nodes. Such loads are not transferred between nodes in the simulator in the same way that thermal loads and electrical loads are, but are input to a node as a variable which may, for example, influence the size of load drawn from other nodes. That is to say, the greater the amount of IT work is applied to a server, the greater the amount of electrical power it will draw from a power supply, and the greater the thermal load it will apply to a cooling system. In nodes in a simulator embodying the present invention, the applied load may be composed of at least one of the following contributions: a contribution or contributions drawn by the node from another node or more than one other nodes; and a contribution applied to the node as a simulation variable.

An element being modelled may generate some loss in having a load drawn from it. Therefore, the output load is composed of at least one of the following contributions: a contribution or contributions drawn by another node or other nodes from the node; and a loss contribution representing work done by the element in converting an applied load into a load drawn by other elements, which loss contribution is drawn by another node as an electrical load or as a thermal load.

The data format in embodiments of the present invention may be further simplified in embodiments in which the data format consists only of the single value and the further single value.

Embodiments of the present invention extend the simple node structure of existing node-based simulators in order to convey more information as independent variables, in a way that retains the benefits of the existing node-based simulators, flexibility of node description and regularity of node structure (that allows an efficient model solution), but enables modelling of more sophisticated data centre structures in a single simulation.

In embodiments of the present invention, each thermal and electrical connection between nodes by which data including values representing nodes are transferred also carry data representing a second value, representing the potential of the associated load to be converted at the node receiving the load. Thus, in addition to the energy or power represented by a load, the energy or power from a node has an associated potential.

In invention embodiments, a physical property represented by the further single value is determined by the node receiving the data representing the drawn load, and by the connection type. That is to say, a single node may receive thermal loads via one or more connections, but the physical property represented by the further single value will be the same from each connection. For example, it may be a temperature or temperature offset from a common base temperature. Likewise, a single node may receive electrical loads via one or more connections, but the physical property represented by the further single value will be the same from each connection. Advantageously, this ensures that the data format is simplified insofar as it is not necessary to include additional fields defining the physical property represented by the further single value. Rather, it has been determined in the setting of the connections at the modelling stage. The simulation is hence simplified and more efficient. Furthermore, determining the physical property represented by the further single value in this way ensures that the further single values from each of more than one connections of a particular type arriving at a particular node can be combined, possibly as an average weighted according to load.

In embodiments of the present invention, where nodes are joined by electrical connections, at the input module of a node, data representing a drawn load of another (predecessor) node is input. If more than one other nodes are connected to the input module of a particular node, then data representing the sum of all the drawn loads of predecessor nodes is input as an applied load. The or each represented load is also represented by a further single value indicating the potential of the load to be transferred at the node to which the data are input (successor node). At the output module of the node, data representing a load drawn by the node (as a predecessor) from another node (as a successor) is output. Invention embodiments are not limited to a simulator in which the node behaviour, must result in the data from the output module representing a load greater than (or equal to in the no-loss case) the load represented by the data at the input module. That is to say, with reference to electrical connections, the load represented by the data input to the node may be greater than the load represented by the data output from the node. Advantageously, this enables energy generators to be modelled in a simulator embodying the present invention.

Some nodes accumulate loads from a number of predecessor nodes. The associated applied potentials may be combined as an average potential weighted according to the applied load. Nodes that distribute thermal loads to a number of successor nodes distribute the same outgoing potential to all these nodes. Similarly, nodes that distribute electrical loads to a number of successor nodes distribute the same outgoing potential to all successor nodes.

In embodiments of the present invention, where nodes are joined by thermal connections, at the input module of a node, data representing a load applied to the node is input. If more than one other nodes are connected to the input module of a particular node, then data representing the sum of all the drawn loads of predecessor nodes is input as an applied load. At the output module of the node, data representing a load drawn by the node (as a predecessor) from another node (as a successor) is output.

Existing node-based simulator technology takes a simplistic approach to the flow of heat in the system being modelled, assuming that no node takes heat away from the flow i.e. nodes can only add heat. This restricts the range of element types and systems that can be modelled as many modern systems, such as data centres, employ a range of cooling technologies. In some configurations these technologies remove just part of the heat load, passing the remainder onto other devices to finish the job. Such data centres cannot be modelled with existing node-based simulator technology.

Invention embodiments are not limited to a simulator in which the node behaviour must result in the data from the output module representing a load greater than (or equal to in the no-loss case) the load represented by the data at the input module. That is to say, with reference to thermal connections, the load represented by the data input to the node may be greater than the load represented by the data output from the node. Advantageously, this enables cooling effects, such as partial cooling by external air, to be modelled in a simulator embodying the present invention.

Furthermore, in another aspect the invention may be embodied by an energy flow simulation method for simulating energy flow in an enclosure using a model, the method comprising composing a model including a plurality of nodes each representing an element responsible for converting an applied load to an output load, the output load including at least one of a loss and a load drawn by one or more other elements; the model also including: a plurality of thermal connections, each thermal connection representing the drawing of a thermal load by one element from another and transferring data representing the drawn thermal load to an input module of one of the plurality of nodes from an output module of another of the plurality of nodes; a plurality of electrical connections, each electrical connection representing the drawing of an electrical load by one element from another and transferring data representing the drawn electrical load to an input module of one of the plurality of nodes from an output module of another of the plurality of nodes; wherein the data transferred via the plurality of thermal connections and the data transferred via the plurality of electrical connections are transferred using a fixed data format comprising a single value indicating the magnitude of the respective load, and a further single value indicating the potential of said respective load to be converted at the node receiving the load.

Features and sub features of different embodiments and different aspects of the present invention may be combined with one another without departing from the scope of the present invention.

Preferred features of the present invention will now be described, purely by way of example, with reference to the accompanying drawings, in which:-

Figure 1 is a diagrammatic representation of a node in a simulator embodying the present invention;
Figure 2 is a diagrammatic illustration of a simulation model in a simulator embodying the present invention;
Figure 3 is a diagrammatic representation of nodes connected by thermal connections as part of a model for a simulator embodying the present invention, including an external air cooling node;
Figure 4 is a diagrammatic representation of nodes connected by thermal connections as part of a model for a simulator embodying the present invention, including a pump node;
Figure 5 is a diagrammatic representation of nodes connected by thermal connections as part of a model for a simulator embodying the present invention, including a heat exchanger node;
Figure 6 is a diagrammatic representation of information flow in a simulation and modelling process embodying the present invention.

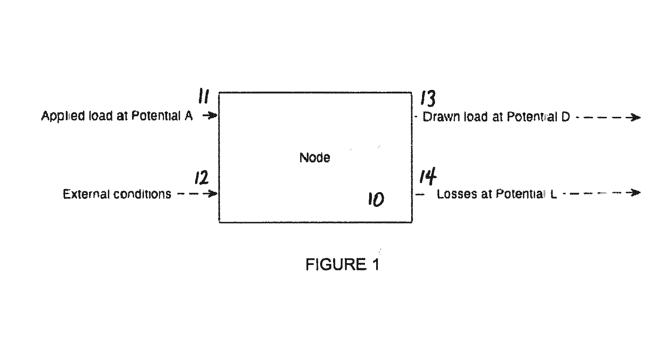

Figure 1 is a diagrammatic representation of a node in a simulator embodying the present invention. It will be understood that the input of external conditions 12 and the output of data representing losses 14 are optional, and their use will depend on the implementation of the embodiment and the element being modelled by the node.

The basic approach of a simulator embodying the present invention is to create a representation of, for example, a data centre as a collection of nodes 10, each node 10 represents a device, or collection of devices, that draws electricity 11 and creates heat 14, or that is responsible for heat exchange, or cooling, or electricity generation. An element is any device, mechanism, or process in the system being modelled at which energy transfer takes place, whether that transfer be between forms of energy (for example, electrical to heat), transfer of heat from one body to another, transfer of heat from one medium to another, or any other form of transfer.

Each node 10 in the simulator contains data and logic, for example, a function, to represent the performance of the element which it represents. The data may include the device capacity and response to applied load and load potential 11 (wherein the further single value indicating the potential of said respective load to be converted at the node receiving the load is referred to as 'potential' or 'load potential' at points of this application for convenience) - how much electricity is drawn to service an applied load at a particular potential 11.

The nodes 10 are connected or joined by connections (which may be notional data connections between one model entity and another) along which flow data representing electricity or heat. Connections are directional to denote the flow from a predecessor node to a successor node, although whereas flow of heat energy is with load (i.e. transferring heat from node A to node B is represented by transferring a thermal load from node A to node B), flow of electrical energy is against the load (i.e. transferring electrical energy (or power) from node A to node B is represented by transferring an electrical load from node B to node A). Each network of nodes 10 and connections can be said to form a Directed Acyclic Graph (DAG), and a data centre (or other system being modelled) can be represented by two or more distinct DAGs overlaid on the nodes 10.

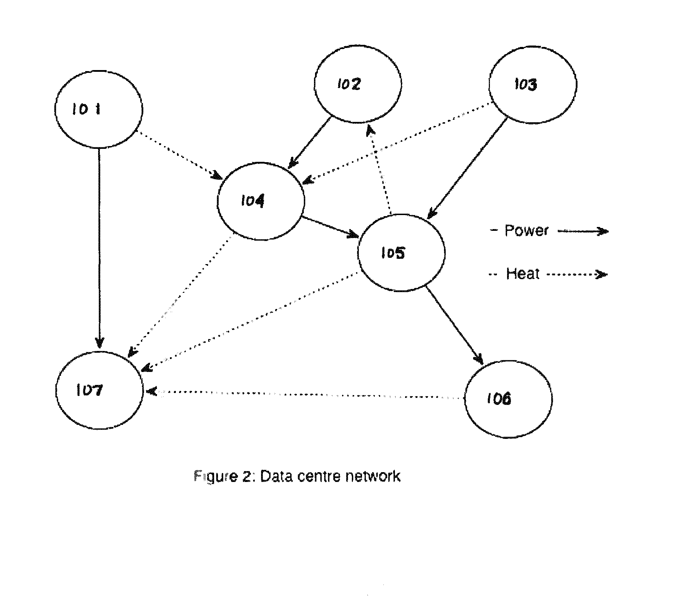

Figure 2 is a diagrammatic illustration of a simulation model in a simulator embodying the present invention. Nodes 102-107 are connected via various thermal (heat) connections (dashed arrows) and electrical (power) connections (solid arrows), which form various DAGs. Each of the nodes 102-107 are nodes 10 as illustrated in Figure 1, although the optional inputs for external conditions 12 are not illustrated in Figure 2, partially for ease of illustration, but also demonstrating that the input of external conditions 12 to the nodes 102-107 is not required.

Figure 2 shows a network of nodes that could represent a data centre, with multiple nodes 102-107 connected by DAGs of differing types. Note that there are 3 DAGs in total in the diagram: one electrical DAG node 101 to node 107; another electrical DAG node 102 to node 104, nodes 103 and 104 to node 105, and node 105 to node 106; and a thermal DAG involving each node 101 to 107. For example, node 106 transfers electrical power to node 105, in other words, node 105 applies an electrical load to node 106. There are no cycles (routes through a DAG that pass through a node more than once) in individual DAGs, but there are cycles when combining heat and electricity DAGs (104 to 105 by electricity - 105 to 102 by heat - 102 to 104 by electricity).

Taking node 106 as an example, node 106 supplies electrical power to node 105 at potential A. That is to say, node 105 applies an electrical load to node 106 at potential A. In handling the electrical load applied by node 105, node 106 generates heat, which is transferred to node 107 as a thermal load.

In a model of any system there may be at least one DAG formed by a series of nodes 10 joined by thermal connections, to represent the flow of heat, and at least one other formed by a series of nodes joined by electrical connections, to represent the flow of electrical power (or energy). Some models will have more than one DAG for electricity and heat when there are independent circuits. Whilst a DAG may not have any feedback loops in itself, a data centre model may have a feedback mechanism, as nodes can be members of multiple DAGs.

Returning to Figure 1, devices may consume power to perform their function, in which case the power or energy represented by the drawn load 13 will be larger than the power or energy represented by the applied load 11. On the other hand, a device may make a net contribution as an energy generator, in which case the power or energy represented by the drawn load 13 will be smaller than the power or energy represented by the applied load 11 (the node will be modelled in such a way that the element is represented as needing to draw from a successor node a smaller amount of power than is represented by the sum of loads applied to it).

Devices may generate heat to perform their function, in which case the power or energy represented by the drawn thermal load (possibly represented by losses) will be larger than the power or energy represented by the applied thermal load. On the other hand, a device may make a net contribution as a cooling device or partial cooling device, in which case the power or energy represented by the drawn thermal load will be smaller than the power or energy represented by the applied thermal load.

The data centre performance, and that of individual elements being modelled, may be at least partially determined by external conditions such as loads placed on the IT equipment and the external temperature. Data representing these conditions can be input to the simulator as simulation variables and accessed by or input to nodes, and in particular a function representing the behaviour of a node.

The outputs of a node may be summarised as:

○ Losses 14, the power used to perform the function of the device, usually expressed as heat and gathered to another node (as a contribution to its applied load) in the simulation that deals with heat (this connects to a heat DAG), that is, via a thermal connection, represented by a single value representing the amount of energy or power in the load and a further single value representing the potential of that energy or power to be transferred at the successor node.

○ Drawn Load 13, this may be passed along as a contribution to the applied load of another node (device) in the appropriate DAG (via a thermal connection for a thermal load, or via an electrical connection for an electrical load, or possibly with a component in each), with a further single value representing the potential of the load.

The inputs to a node are:

○ Applied load 11, the sum of all the Drawn Loads of predecessor nodes in the DAG (the node may have an applied thermal load and an applied electrical load), wherein each load contributing to the applied load is represented by a single value representing the amount of energy or power of the load, and a further single value representing (or indicating) the potential of that load to be transferred at the successor node.

○ External conditions 12 e.g. outside temperature.

The relationship between the input and output values is a model of the data centre component, and is represented by a function configured in the modelling phase based on knowledge of the behaviour of the element being represented by the node 10. The function models the physical characteristics of the elements being modelled, for example, data centre equipment.

The drawn load 13 and the losses of a node 14 are transferred to successor nodes via a thermal connection (as part of a heat DAG) or via an electrical connection (as part of an electricity DAG). As with all loads (or representations of loads) in embodiments of the invention, the loads are represented by a single value representing the size, extent, or magnitude of the energy in the load (although depending on the way in which the embodiment is implemented, power could be substituted for energy), and by a further single value representing the potential of the load to be transferred at the successor node. The interpretation of the two single values, in terms of the physical properties which they represent, firstly as thermal or electrical energy (or power) is determined by the type of connection along which the data is passed (thermal or electrical), and secondly the property represented by the potential value is determined by the modelling of the node to which the data are input (the successor node).

External air may be introduced directly into a data centre or other system to cool the devices. Often this is only partial cooling and other devices deal with the remaining heat.

The effectiveness of external air-cooling depends on the temperature difference between the data centre air and the external air and so as the external temperature and the data centre air temperature changes, the temperature of the cooled data centre air changes.

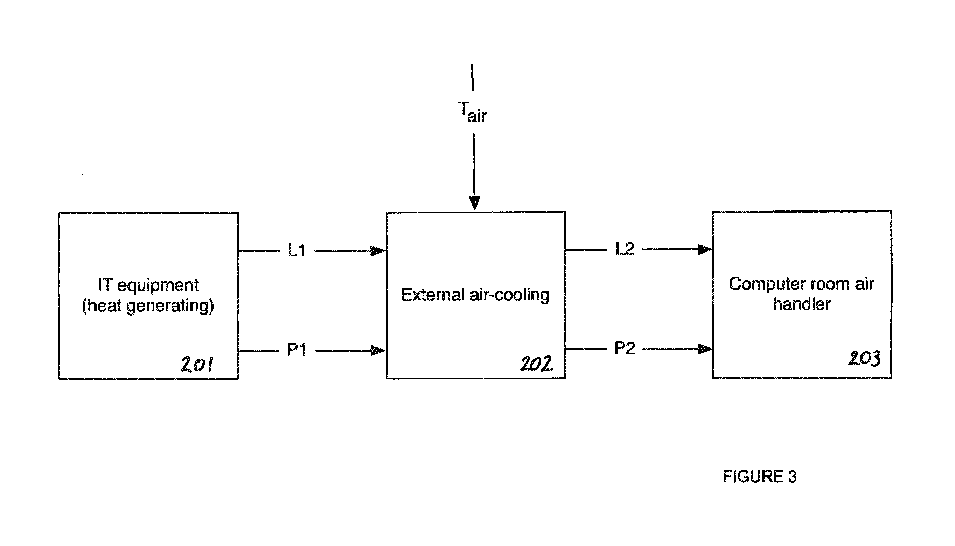

Figure 3 illustrates a simple thermal or heat DAG including a node 202 representing the process of partial cooling by external air. Electrical connections and loads are omitted for the sake of simplicity, although it is noted that the IT equipment node 201 and the computer room air handler node 203 would each draw an electrical load. The external air cooling node 202 has a thermal load L1 applied to it at potential P1, wherein P1 represents the temperature of the load L1; the IT equipment 201 generates an amount of heat L1 at temperature P1. The external air cooling node 202 is supplied with an input of an external variable $T_{air}$, whose value may be input as a simulation variable prior to beginning the actual simulation, and which represents the temperature of the external air being channelled around the IT equipment. The external air cooling node 202 applies a thermal load L2 to the computer room air handler 203 at potential P2. This represents the remaining heat which the external air cooling does not remove from the IT equipment.

The amount of cooling at node 202 is calculated by interpreting the potential P1 of the Applied Load as a temperature offset and creating a Load/Loss computation as a function of the node 202 that extracts an amount of heat dependent on the difference between temperature offset P1 and the external temperature Tair (also adjusting Tair for the offset). The potential P2 of the drawn load L2, if required as temperature offset, is computed from the applied load L1 and its potential P1, the specific heat capacity of air H, and the flow rate of the external air F. Furthermore, depending on the complexity of the modelling, there may be some additional coefficient or factor. The basic equation is as follows:

$$L2 = L1-H*F*(Tair- Tbase -P1)$$
$$P2= L2/(L1/P1)$$
$$H = \text{heat capacity of air } (J/K/m^3)$$
$$L2= \text{drawn load}$$
$$L1= \text{applied load}$$
$$P2 = \text{potential of drawn load}$$
$$P1= \text{potential of Applied Load}$$
$$Tair = \text{outside air temperature}$$
$$TBase = \text{base temperature for offset}$$
$$F = \text{flow rate of outside air } (m^3/sec)$$

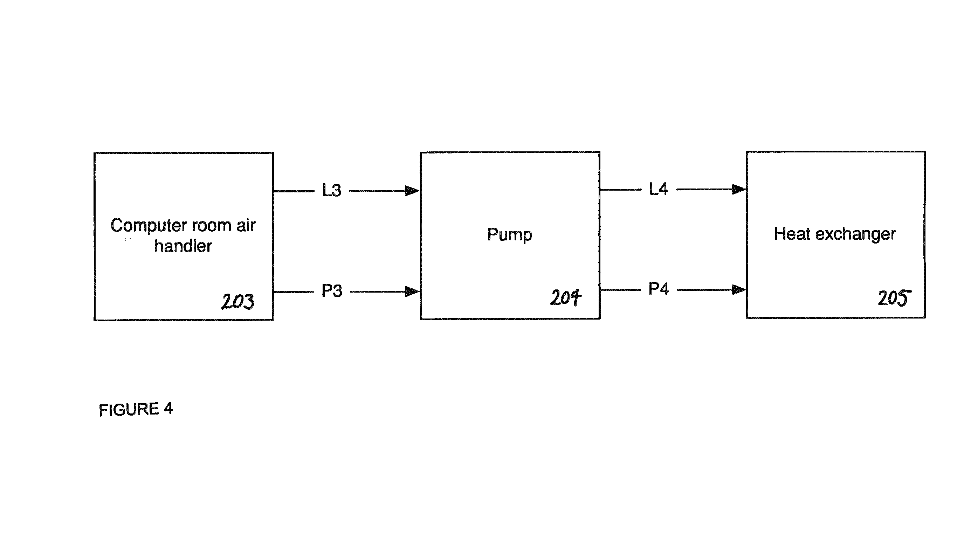

Embodiments of the present invention enable water pumps to be modelled under a wider range of operating policies. Figure 4 illustrates a simple thermal DAG including a pump node 204. Potential can again be considered as an offset above a base temperature (that of the coldest water). The computer room air handler, represented by node 203 in Figure 3, creates heated water (to take away the heat from the load L2 in Figure 3) which has an amount of heat represented by L3 at a temperature represented by P3. The pump node 204 accepts load L3 at potential P3 as an applied load, which represents the pump moving the water through the data centre. The pump's performance depends on the volume of water that needs to be moved - which can be computed as in Section 5.1.2, that is to say, it can be represented by a function in the pump node 204 such as:

$$F = L3/ (Hwater*P3)$$

$$Hwater = \text{heat capacity of water } (J/K/m^3)$$

The pump does nothing to the amount of heat or the water temperature so P4 = P3 and L4 = L3, the addition of potential here allows more accurate modelling of pump performance. In other words, the amount of electricity the pump draws in order to move a certain amount of heat L3 is dependent upon the temperature (or temperature offset) P3. A small amount of water at a high temperature may have the same amount of heat as a larger amount of water at a lower temperature, but the pump will consume less electrical power moving the smaller amount of water than it would the larger amount of water. The flow rate F can be thought of as determining the pumps losses, which would be modelled in the simulator as an electrical load applied to an electrical supply node.

The pump moves water to a heat exchanger, which in the simulator is modelled by a pump node 204 applying transferring a load (amount of heat) L4 to a heat exchanger node 205 at a water temperature indicated by P4.

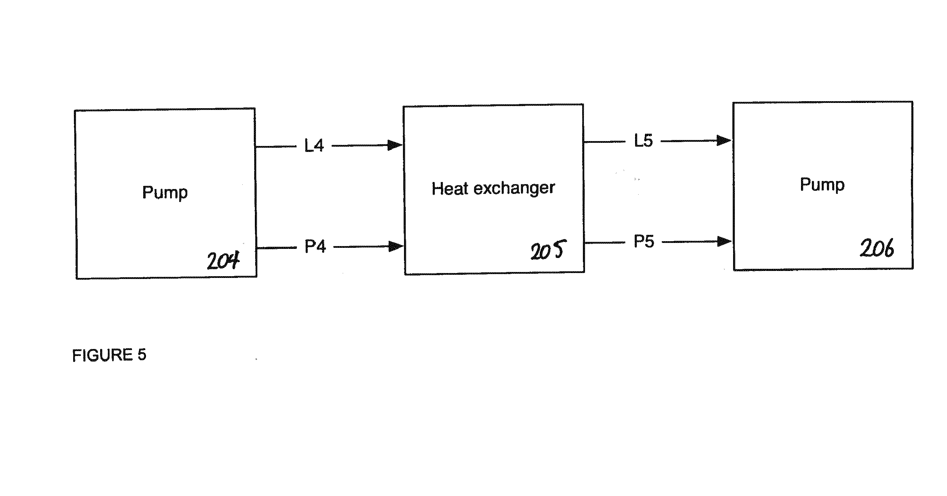

Embodiments of the present invention allow modelling of heat exchangers. Figure 5 illustrates a heat exchanger node 205. A heat exchanger will change the temperature of a body carrying heat, hence a heat exchanger node 205 (see Figure 5) will alter the potential P4 of the heat from the applied load L4 from pump node 205 to the drawn load L5. The amount of heat is unchanged between the applied load L4 and the drawn load L5 (so L4=L5). In physical terms, a heat exchanger may mediate a change in fluid moving the heat or a change in flow rate. The change in potential (from P4 to P5) can be used to model effects such as increase in IT load affecting the loss due to water pumps and to allow exploration of the energy effects of setting temperatures as certain values (hall temperature versus water temperature).

The potential can be set by requiring conservation, since L4= L5 (no losses in exchangers) we can use:

$$Fapplied* Papplied = Fdrawn*Pdrawn$$

where Papplied=P4 and Pdrawn= P5

That is to say the product of the fluid flow and fluid temperature may be a conserved quantity in a node representing a heat exchanger. Thus, the changes between input and output flows can be modelled in the function of a heat exchanger node 205, and in the simulation reflected by the potentials of the applied and drawn loads.

Electrical device performance dependence on power factor can be modelled by associated the potential of an electrical DAG with power factor. Devices applying load can communicate their power factor as it changes with load through the potential. For example, an uninterruptable power supply can be modelled using power factor as the potential of a drawn load.

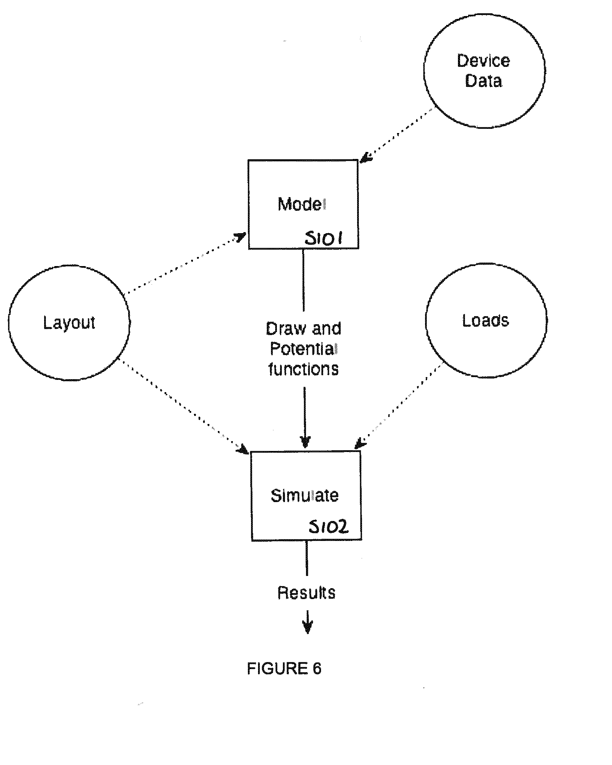

Figure 6 shows the flow of information encompassing the modelling S101 and simulation S102 according to embodiments of the present invention, with processes in rectangles and data sources in circles. The simulate process S102 performs the simulation, producing results. The simulate process S102 is initialised by load data (e.g. information technology loads and weather data, otherwise referred to as simulation variables) and by a layout, which describes, for example, the model's DAGs. The simulate process S102 also , needs device performance data, the relationship between applied load, potential and other loads and the device's draw. This data is a result of a model process where relationships are developed that model the desired processes. Node properties (functions) are configured as part of the model process, which draws on information about the elements being modelled, and the layout. The model process is effectively the development of a function to describe the behaviour of a node. Behaviour defines the size and potential of output that is generated by the node having received a particular size and potential of input, and given external conditions (such as an amount of IT work a node must perform, or a workrate). These relationships and behaviours depend on the nature of the incoming and outgoing potentials, and so the model process S101 must also be aware of the layout. In addition, the model process S101 may also needs data about the actual devices.

In the model process S101, a data centre model may be initialised with a network structure (nodes plus DAGs), described by a layout. In the simulate process, results are found by stepping through the DAGs in turn, evaluating the loads on each node and the loads drawn by the nodes. Feedback between DAGs means that several sweeps through the DAGs may be required before consistency between input and output values for the nodes is achieved. Eventually simulation yields the output of the simulator, which is the load applied to each node (electricity and heat) and the load drawn by each node. These values can be aggregated to compute the overall performance and efficiency of the data centre or parts of the data centre. Hence, simulations can be used to find optimum operating conditions of a data centre or other system being modelled, for example, to optimise water temperatures, to find times of day or external temperatures at which the system is most efficient, or to identify parts of the data centre at which efficiency savings could be made.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An energy flow simulator for modelling energy flow in an enclosure using a model, the model comprising:

   a plurality of nodes each representing an element responsible for converting an applied load to an output load, the output load including at least one of a loss and a load drawn by one or more other elements;

the model comprising:

a plurality of thermal connections, each thermal connection representing the drawing of a thermal load by one element from another and being configured to transfer data representing the drawn thermal load to an input module of one of the plurality of nodes from an output module of another of the plurality of nodes;
a plurality of electrical connections, each electrical connection representing the drawing of an electrical load by one element from another and being configured to transfer data representing the drawn electrical load to an input module of one of the plurality of nodes from an output module of another of the plurality of nodes;
wherein
the data transferred via the plurality of thermal connections and the data transferred via the plurality of electrical connections are transferred using a fixed data format comprising a single value indicating the magnitude of the respective load, and a further single value indicating the potential of said respective load to be converted at the node receiving the load.

2. An energy flow simulator according to claim 1, wherein
when data representing a thermal load is transferred using the fixed data format, the further single value is a value, representing a temperature difference between a medium carrying the thermal load and a predetermined temperature stored by the node outputting said data.

3. An energy flow simulator according to claim 1 or 2, wherein each node includes:

an input module, configured to receive data representing the applied load;
a calculation module, configured to calculate data representing the output load by applying a function to the received data representing the applied load; and
an output module, configured to make the calculated data representing the output load available for transfer to other nodes.

4. An energy flow simulator according to any of claims 1 to 3, wherein
input variables to the function include the single value and the further single value.

5. An energy flow simulator according to any of claims 1 to 4, wherein
at least some of the plurality of nodes further comprise an external variable input configured to receive data representing an environmental variable at the element, and
a value representing the environmental variable represented by the received data representing the environmental variable is an input variable to the function applied by the calculation modules of said at least some of the plurality of nodes.

6. An energy flow simulator according to any of claims 1 to 5, wherein
the applied load is composed of at least one of the following contributions:

a contribution or contributions drawn by the node from another node or more than one other nodes; and
a contribution applied to the node as a simulation variable.

7. An energy flow simulator according to any of claims 1 to 6, wherein
the output load is composed of at least one of the following contributions:

a contribution or contributions drawn by another node or other nodes from the node; and
a loss contribution representing work done by the element in converting an applied load into a load drawn by other elements, which loss contribution is drawn by another node as an electrical load or as a thermal load.

8. An energy flow simulator according to any of claims 1 to 7, wherein
the fixed data format consists only of the single value and the further single value.

9. An energy flow simulator according to any of claims 1 to 8, wherein
a physical property represented by the further single value is determined by the node receiving the data representing the drawn load, and by the connection type.

**10.** An energy flow simulator according to any of claims 1 to 9, wherein
the load represented by the data input to the node may be greater than the load represented by the data output from the node.

**11.** An energy flow simulation method for simulating energy flow in an enclosure using a model, the method comprising composing a model including:

a plurality of nodes each representing an element responsible for converting an applied load to an output load, the output load including at least one of a loss and a load drawn by one or more other elements;
the model also including:

a plurality of thermal connections, each thermal connection representing the drawing of a thermal load by one element from another and transferring data representing the drawn thermal load to an input module of one of the plurality of nodes from an output module of another of the plurality of nodes;
a plurality of electrical connections, each electrical connection representing the drawing of an electrical load by one element from another and transferring data representing the drawn electrical load to an input module of one of the plurality of nodes from an output module of another of the plurality of nodes; wherein
the data transferred via the plurality of thermal connections and the data transferred via the plurality of electrical connections are transferred using a fixed data format comprising a single value indicating the magnitude of the respective load, and a further single value indicating the potential of said respective load to be converted at the node receiving the load.

**12.** A computer program which, when executed by a computing device, causes the computing device to function as an energy flow simulator according to any of claims 1 to 10.

FIGURE 1

Figure 2: Data centre network

EP 2 608 082 A1

$T_{air}$

| IT equipment (heat generating) | | External air-cooling | | Computer room air handler |

201      L1 →      202      L2 →      203

P1 →      P2 →

FIGURE 3

Heat exchanger — 205

Pump — 204

Computer room air handler — 203

L4  P4  L3  P3

FIGURE 4

FIGURE 5

FIGURE 6

Europäisches
Patentamt

European
Patent Office

Office européen
des brevets

**EUROPEAN SEARCH REPORT**

Application Number

EP 11 19 4404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/292976 A1 (NEWCOMBE LIAM [GB] ET AL) 18 November 2010 (2010-11-18) * the document in particular, paragraphs [0002], [0149] - [0180], [0239] * ----- | 1-12 | INV. G06F17/50 |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 11 April 2012 | Lerbinger, Klaus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                          

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 19 4404

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2012

| Patent document cited in search report | Publication date | Patent family member(s) | Publication date |
|---|---|---|---|
| US 2010292976 A1 | 18-11-2010 | EP 2433231 A2<br>GB 2482824 A<br>US 2010292976 A1<br>WO 2010133832 A2 | 28-03-2012<br>15-02-2012<br>18-11-2010<br>25-11-2010 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010133832 A